Europäisches Patentamt

(19) European Patent Office

Office européen des brevets

(11) Publication number: **0 057 081**

A2

## (12) EUROPEAN PATENT APPLICATION

(21) Application number: **82300283.7**

(22) Date of filing: **20.01.82**

(51) Int. Cl.³: **B 60 H 1/24**
**F 24 F 13/06**

(30) Priority: **24.01.81 GB 8102230**

(43) Date of publication of application:
**04.08.82 Bulletin 82/31**

(84) Designated Contracting States:
**DE FR GB IT**

(71) Applicant: **CLEARPLAS LIMITED**
**Bayton Road**
**Exhall Coventry CV7 9EL(GB)**

(72) Inventor: **Haynes, Charles George**
**9 Raeburn Road**
**Great Barr Birmingham, B43 7LG(GB)**

(74) Representative: **Anderson, John Robert**
**Browning et al,**
**WALFORD & HARDMAN BROWN Trinity House Hales**
**Street**
**Coventry, CV1 1NP(GB)**

(54) Air discharge nozzle for a heating or ventilating system.

(57) A directional air discharge nozzle of the kind comprising a tubular air deflector member (1,2) mounted for swivelling in a housing (10) through which air is to be passed to and through the deflector member, whereby air admitted to the housing (10) is directed by the deflector member (1, 2) in a required direction by appropriate swivelling of the deflector member in the housing. The deflector member (1, 2) has a closure plate (3) therein which is movable in the fore-and-aft directions of the deflector member (1, 2) between closed and open positions. In the open position of the closure plate (3) the air flows through the member (1, 2) around the whole periphery of the closure plate (3). The closure plate (3) may be mounted on a screw-threaded spindle (9) extending co-axially of the deflector member (1,2), whereby rotation of the closure plate (3) relatively to the deflector member (1, 2) effects movement of the closure plate (3) axially of the deflector member (1, 2) between its closed and open positions. Alternatively, the closure plate may be opened and closed by successive depression of the closure plate relatively to the tubular member by providing an operating mechanism of the "push-push" type.

FIG.3

0057081

AIR DISCHARGE NOZZLE FOR A HEATING OR VENTILATING SYSTEM

The invention relates to an air discharge nozzle for a heating or ventilating system and is particularly concerned with a directional nozzle of the kind comprising an air deflector member which is mounted for swivelling in a housing through which air is to be passed, the deflector member having an air passage extending therethrough, whereby swivelling the deflector member in its seating will direct the air flow in a required direction.

An air discharge nozzle of this type is used to direct heated or cold air into the interior of a motor vehicle or into the cabin or an aircraft or boat.

Directional air discharge nozzles of this type have also included either within the housing upstream of the deflector member or within the deflector member itself an obturating valve member, whereby the rate of flow of air through the deflector member is controllable and/or the air flow can be shut-off.

G.B. No. 1, 128, 521 is concerned with such an air discharge nozzle in which a deflector member having a part-spherical external surface contains in a throughway therein a pair of pivotable flaps by which the rate of flow of air through the defelctor member can be controlled and shut-off. The deflector member is adjustable universally in its seating by a control knob in the deflector member which can also be rotated to open and close the flaps. A disadvantage of this existing nozzle is that the axis of pivoting of the flaps extends diametrically across the deflector member and so even when the flaps are fully open, there cannot be a complete annular flow path through the deflector member and so there is always some restriction to the air flow. Another disadvantage is the requirement for there to be a gear system between the knob and the flaps. An object of the invention is to provide a nozzle which will produce an uninterrupted air flow-path through the deflector member when fully open and which has a smaller number of parts than the known nozzle and is therefore cheaper to produce.

According to the invention, a directional air discharge nozzle comprises a tubular air deflector member mounted for swivelling in a housing through which air is to be passed to and through the deflector member, whereby air admitted to the housing is directed by the deflector member in a required direction by appropriate swivelling of the deflector member in the housing, the deflector member having a closure plate therein which is movable in the fore-and-aft directions of the deflector member between a closed position in which it engages a seating therein extending peripherally around the deflector member to close the flow-path therethrough and an open position in which the closure plate is spaced from the seating, thereby to permit air flow between the closure plate and the peripheral wall of the deflector member around the whole periphery of the closure plate and through the seating in the deflector member.

The deflector member may be of any desired shape in a plane transverse to the direction of air flow therethrough. For example, it may be rectangular, elliptical or circular. Where the said transverse shape is circular, the closure plate and the seating therefor are also conveniently circular in shape. Furthermore, the outer peripheral surface of the deflector member may be of part-spherical shape and be engaged with a complementary seating in the housing, whereby the deflector member is swivellable universally in the housing.

The circular closure plate may be mounted in a deflector member, having a part-spherical outer surface, on a screw-threaded spindle extending co-axially of the deflector member, whereby rotation of the closure plate relatively to the deflector member will effect movement of the closure plate axially of the deflector member between said closed and open positions of the closure plate.

Alternatively, the closure plate may be movable between said closed and open positions without rotation of the closure plate relatively to the deflector member, the deflector member having spring means therein to urge the closure plate into said closed position and releasable catch means to hold the closure plate in said open position against the return force of the spring means, the catch means being actuated on depression of the closure plate from its closed position to its open position against the return force of the spring means and being released on further depression of the closure plate followed by relaxation of said further depression to permit the closure plate to be returned by the spring means to said closed position.

The invention also includes a tubular deflector member for use in a directional air discharge nozzle as set out in any of the immediately preceding four paragraphs.

By way of example, two embodiments of tubular deflector member in accordance with the invention are now described with reference to the accompanying drawings, in which:-

Figure 1 is a front view of the first deflector member;

Figure 2 is a rear view of the first deflector member;

Figure 3 is an axial section through the first deflector member and showing the closure plate therein in its open position;

Figure 4 is a similar view to Figure 3 showing the closure plate in its closed position;

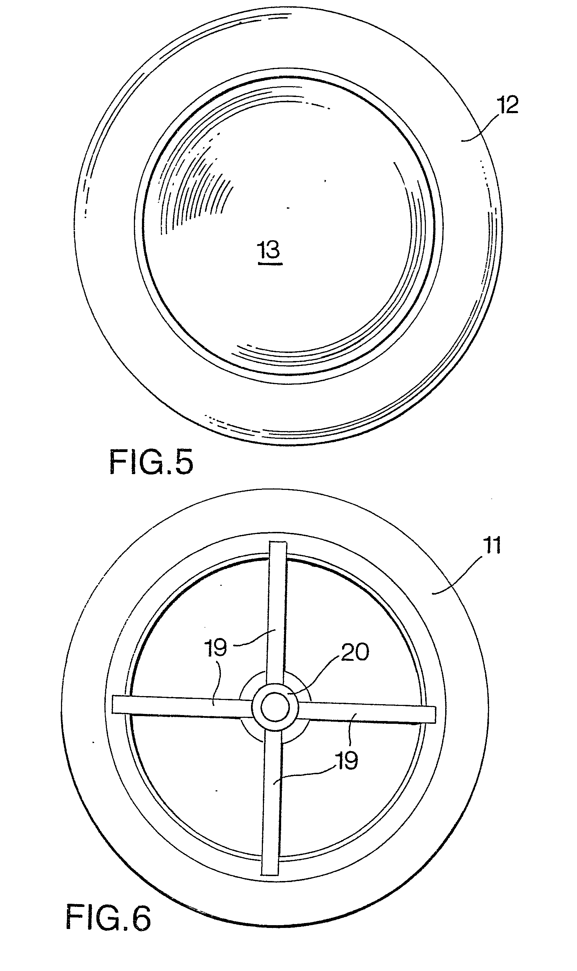

Figure 5 is a front view of the second deflector member;

Figure 6 is a rear view of the second deflector member;

Figure 7 is an axial section through the second deflector member and showing the closure plate therein in its open position;

Figure 8 is a similar view to Figure 7 showing the closure plate in its closed position;

Figure 9 is a side view of a closure plate support spindle shown in Figures 7 and 8;

Figure 10 is an end view in the direction of arrow X in Figure 9;

Figure 11 is an end view of a closure plate catch member shown in Figures 7 and 8;

Figure 12 is an end view of a housing for the closure plate support spindle in the direction of arrow XII in Figure 8;

Figure 13 is a part-section and part-side view of the closure plate support spindle housing in the direction of arrow XIII in Figure 12, and

Figure 14 is a similar view to Figure 13 in the direction of arrow XIV in Figure 12.

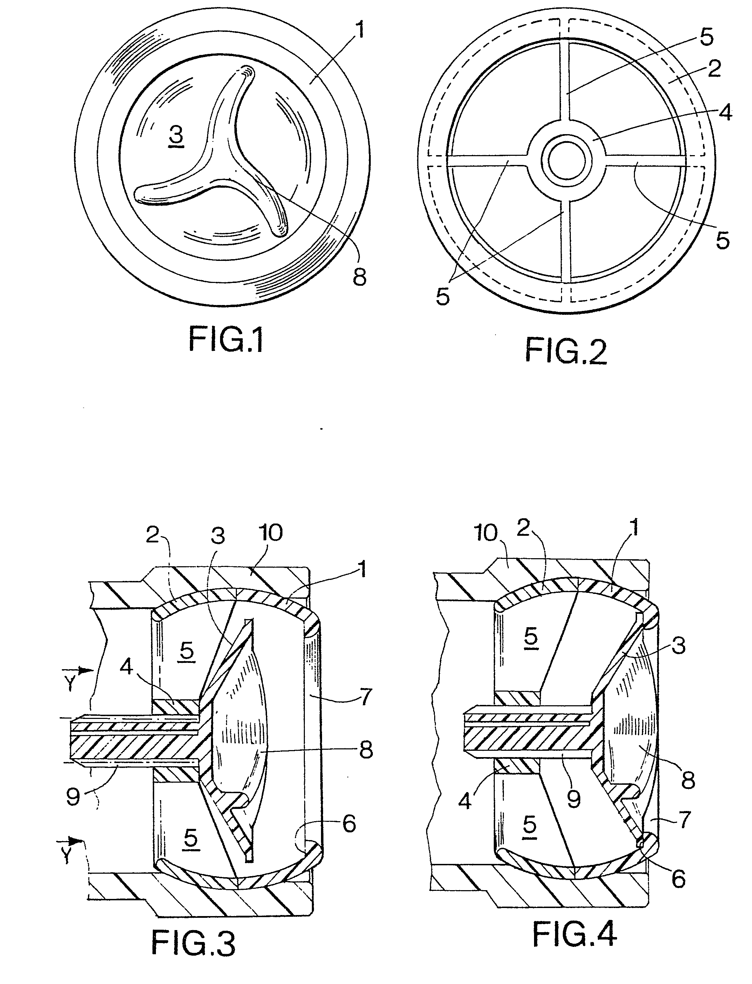

Referring to Figures 1-4, the first deflector member comprises a tubular body having a part-spherical outer periphery. The body is made in two parts 1 and 2 which are secured together end-to-end after the closure plate 3 has been fitted therein. The rear body portion 2 is of circular shape in end-view and has a co-axial centre bearing 4 which is supported on at least two, for example, four thin ribs 5 which may be shaped in the manner of aerofoil-like blades to cause minimum interruption to the flow of air through the otherwise undisturbed tubular flow path through the body in the direction of arrows Y.

The front body portion 1 is also of circular shape in end view and has a flanged rim 6 at its front end defining an annular section bounding a circular discharge aperture 7.

The closure plate 3 is also of circular shape in end view and in its closed position, as shown in Figure 4, it engages around its whole periphery with the flanged rim 6. The closure plate 3 has a central knob or a finger-grippable protrusion, such as the ribs 8 illustrated in Figures 2-4, and which in the closed position of the closure plate is substantially flush with the front of the front body portion 1. Thus the knob or other protrusion, such as the ribs 8, does not project, or only projects by a very small distance as shown, beyond the deflector member. This is important from the safety point of view where the deflector member is mounted in a motor vehicle instrument panel. The closure plate 3 is inwardly dished to enable the operator to grip the knob or other protrusion 8. The knob or other protrusion 8 is co-axial with a rearwardly-extending, screw-threaded spindle 9 which engages a screw-threaded, axial throughway in the bearing 4. Thus turning the knob or other protrusion 8 about the axis of the spindle 9, turns the closure plate 3 bodily and also effects movement thereof axially of the body 1, 2 between the open and closed positions of the closure plate 3 according to the direction of turning. As the axial length of the bearing 4 and the axial distance through which the closure plate 3 is moved are short, it is desirable that multi-start screw-threads of coarse pitch are provided on the spindle 9 and in the bearing 4. The spindle 9, knob or other protrusion 8 and closure plate 3 are conveniently a synthetic plastics moulding and the spindle is split at 10 and is oversize with respect to the bore of the bearing 4, thereby to provide resistance to turning to avoid unintentional opening or closing of the closure plate by vibration or by air movement through the deflector member.  Alternatively a spring may be provided to provide resistance to turning of the spindle 9. The closure plate 3 may be set to an intermediate partly-open position by appropriate turning of the knob or other protrusion 8.

As in the nozzle of the aforesaid Patent Specification, the deflector member is adjustable universally in its seating in a fixed housing 10 (see Figure 3) by the operator gripping the knob or other protrusion 8, or the front edge of the tubular body part 1.  Thus the knob or other protrusion 8 can be used both to swivel the deflector member and to control the rate of flow of air through the deflector member.  The multi-start screw thread enables the closure plate 7 to be opened and closed by simple turning movement of the knob or other protrusion 8 by the operator.  The bearing 4 may have a rearward extension providing a closed socket in which the rearward end of the spindle 9 is accommodated with clearance for opening adjustment.  The socket where provided, may be sufficiently long in the axial direction as to be engageable with the interior surface of a tubular fixed housing, indicated at 10 in Figure 3, and providing a part-spherical seating in which the deflector member is mounted for universal swivelling,  the rearward socket extension of the bearing 4 acting as a stop to limit the extent of permitted universal swivelling.

The deflector member illustrated in Figures 1-4 has several advantages over that of the aforesaid Patent Specification.  The most important is that the flow path through the deflector member, when the closure plate 3 is fully or partly open embraces the whole circumferential length of the annular space between the body 1, 2 and the periphery of the closure plate 3 and thus produces a uniform  and unimpeded air stream through the open discharge aperture 7.  Furthermore the frusto-conical shape of the closure plate 3, as illustrated, aids the air flow and it is possible by selecting appropriate relative diameters for the body 1, 2, the closure plate 3 and the discharge aperture 7 to produce a required ratio of flow area at the periphery of the closure plate 3 in its fully-open or partly-open positions and through the discharge aperture 7 and so produce a required flow pattern. It has been found that this design of deflector member and closure plate reduces the tendency of the deflector member to vibrate or produce a whistle compared with the known deflector member in which the air flow is controlled by pivoted flaps. Another advantage is that as the closure member 7 engages the seating 6 by an axial movement and around the whole circumference of a single member, the efficiency of sealing, when the closure member 7 is closed is better than in the existing deflector member where a pair of pivoted flaps engage against a seating inside the tubular wall of the deflector member and where leakage around the closed flaps could occur. Yet another advantage is that the gear drive between the knob and spindle and the flaps in the deflector member of the aforesaid Patent Specification is eliminated and replaced by the single unitary closure plate 7, knob or protrusion 8 and screw-threaded spindle 9. This therefore results in easier and cheaper manufacture and assembly.

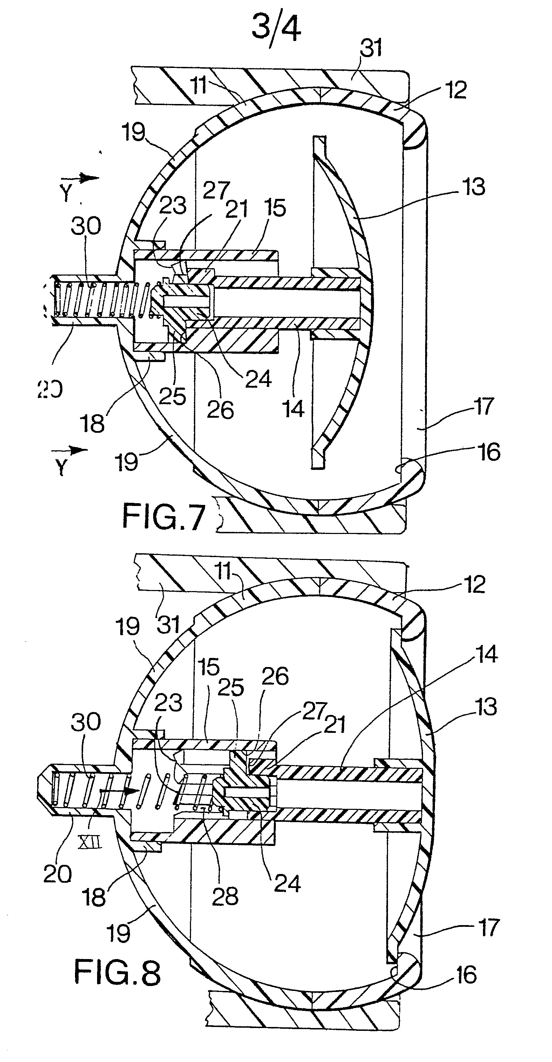

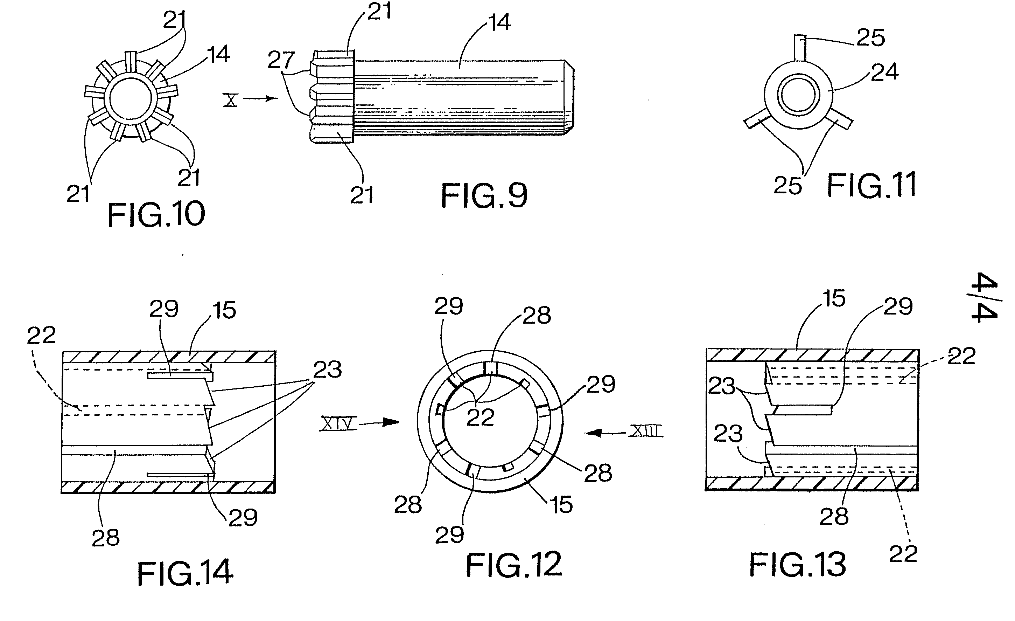

The second embodiment of tubular deflector member shown in Figures 6-14 comprises a tubular body formed by two parts 11, 12 which are secured together end-to-end after the closure plate 13 has been placed inside the body. As in the first embodiment, the outer peripheral surface of the body 11, 12 is part-spherical and engages in a fixed housing, indicated at 31 in Figure 7, in which the deflector member is arranged to be swivelled universally. Air flows through the open rear of circular shape in the direction of arrows Y and flows through the annular space between the closure plate 13 and the tubular body 11, 12 when the closure plate 13 is open and emerges through a circular aperture defined by an inwardly-flanged rim 16 at the front of the body part 12. The closure plate 13 is supported on a spindle 14 which is slidable in a tubular spindle housing 15 secured at its left-hand end, as shown in Figures 7 and 8, in a socket 18 supported on at least two, for example four ribs 19 integral
with the rear body part 11. As in the first embodiment, the ribs 19
are made thin to produce little interference to the flow of air
through the deflector member and they may be of acrofoil shape to
aid the flow pattern. The socket 18 also forms a spring housing 20,
to be described hereinafter.

The closure plate 13 is movable axially of the body 11, 12 between
its closed position shown in Figure 8 and its fully-open position
shown in Figure 7 and does not rotate by a screw motion as in the
first embodiment. The movement of the closure plate 13 is effected
by successive depression of the closure plate 13 by the operator,
by a mechanism described hereinafter. The mechanism illustrated
also provides for an intermediate partly-open position between
the Figure 7 and 8 positions.

The mechanism comprises the spindle 14 on which the closure plate
13 is fixed. The end of the spindle 14 remote from the closure
plate 13 is provided with nine splines 21 arranged at 40° angular
spacings around the longitudinal axis of the spindle 14. The
teeth 21 are slidable along nine slots 22, provided on the inside
of the tubular spindle housing 15 also at 40° angular spacings.
Each time the closure plate 13 is depressed, the splines 21
slide along respective slots 22. The left-hand end of the slotted
portion of the spindle housing 15 is formed with sloping serrated
end faces 23, best shown in Figures 13 and 14. A rotatable catch
member 24 is located in the spindle housing 15 and this has three
radial arms 25 formed with bevelled radial edges 26 which are
engaged by the ends of three respective splines 21 on the spindle
14, and pushed to the left each time the latter is displaced to
the left, as viewed in Figures 7 and 8, by the operator having
depressed the closure plate 13. The arms 25 are equi-angularly
displaced at 120° spacings about the axis of rotation of the
catch member 24. The bevelled radial edges 26 of the arms 25 are engaged by the leading end edges of the splines 21 which are also bevelled at 27 (see Figure 9) and so each time the catch member 24 is pushed to the left by the splines 21, it will also be turned in the clockwise direction, as viewed in Figure 12, through 40° and the arms 25 will ride over respective serrated edges 23. One set of three of the spline slots 22 spaced apart at 120° intervals are radially concurrent with respective radially deeper long slots 28 formed in the inside peripheral face of the spindle housing 15. The next adjacent set of three spline slots 22 in the clockwise direction are simple spline slots and do not correspond with radially-deeper slots. However, the next but one adjacent set of three spline slots 22 do co-operate with respective radially deeper slots 29 but these are shorter than the slots 28. The arms 25 of the catch member 24 are slidable along the radially-deeper slots 28, 29 but they cannot enter the set of simple spline slots 22 which are concurrent with radially-deeper slots. The catch member 24 is urged to the right, as viewed in Figures 7 and 8, by a helical compression spring 30 located in the spring housing 20. Thus the catch member 24 is urged by the spring 30 to the right, as viewed in Figures 7 and 8, so that the arms 25 are maintained in contact with serrated faces 23 on the spindle housing 15 or with the right-hand ends of slots 28 or 29, when the arms 25 have entered a respective slot 28 or 29.

The operation of the closure plate 13 and the aforesaid mechanism is now described. In the closed position in Figure 8, the arms 25 of the catch member 24 are located in respective long slots 28 and are urged by the spring 30 to the right to hold the closure member 13 closed. The operator then depresses the closure plate 13 which will move to the left against the force of the spring 30 until the splines 21 have pushed the arms 25 from the long slots 28. When the arms have left the respective long slots 28, they will be turned through 40° in the clockwise direction and thereby come into registration with the respective simple spline slots
22. On releasing the closure member 13, the spring 30 will push
the arms 25 into engagement with respective serrated faces 23
as the arms 25 cannot enter the simple spline slots 22. The
position is shown in Figure 7 in which the closure plate 13 is
held in its fully-open position. On depressing the closure plate
13 again, the splines 21 will push against the arms 25 of the
catch member 24 and will again turn the latter through 40° in
the clockwise direction, until the arms 25 are in axial registration
with the respective shorter slots 29. Then on the operator
releasing the closure plate 13, the spring 30 will cause the arms
25 to travel down the respective shorter slots 29 until the
arms 25 have engaged the right-hand ends of the respective shorter
slots 29. In this position the spindle 14 will have been pushed
to the right to hold the closure plate 13 in an intermediate partly-
open position (not illustrated). On depressing the closure plate
13 again, the splines 21 will push the arms 25 of the catch
member 24 from the shorter slots 29 and the arms 25 will be
turned again through 40° in the clockwise direction, as viewed in
Figure 12, into registration with the next adjacent long slot 28.
On release of the closure plate 13, the spring 30 will push the
arms to the right along the long slots until the closure member
13 has engaged the rim 16 and the deflector member has been closed.
On the next depression of the closure plate 13, the cycle of
operation will be repeated. Thus successive depression and
release of the closure plate 13 will fully-open, partly-open and
close the closure plate 13 respectively.

It is possible to eliminate the intermediate partly-open position
by using a catch plate 24 having four radial arms 25 disposed
apart at 90° intervals and by having eight equi-angularly disposed
spline slots 22 in the spindle housing of which alternate slots
form the long slots 28 and alternate slots remain as simple spline slots 22. Then on each depression of the closure plate 13 the catch member will be turned through 45°, instead of through 40° as in the illustrated example. On one depression and release of the closure plate 13 the arms 25 will travel along the long slots 28 to the closed position shown in Figure 8 and on the next successive depression and release of the closure plate 13, the arms 25 will be held against the serrations 23 and the closure plate 13 will be held in its open position shown in Figure 7. This cycle of operation will then be repeated successively.

As for the first embodiment, the deflector member of the second embodiment has the advantages of a complete annular flow path therethrough when the closure plate 13 is open or partly-open; the flow pattern can be controlled by the relative diameters of the closure plate 13, the body 11, 12 and the discharge aperture 17 and by the shape of the closure member. Also the sealing of the closure plate 13 against the rim 16 is by a positive axial movement, is circumferentially continuous and less prone to leakage. Furthermore the action of opening and closing the closure plate 13 is a simple push and release action which is simple and safe for the driver of a motor vehicle to perform without distracting his attention from the road. Another advantage is that there is no knob which the drive or a passenger could hit in the event of an accident. As there is no knob, the deflector member is swivelled universally by the operator pushing the rim 16 sideways or pulling it sideways when the closure plate 13 is open. The spring housing 20 may extend rearwardly sufficiently to form a stop to limit the extent of the universal swivelling by the rearward end of the spring housing 20 being engageable with the internal surface of the fixed housing 31, shown in Figure 7.

In both embodiments, and particularly in the second embodiment, as it is uninterrupted by a knob, the front face of the closure plate can be finished in a material similar or in contrast to the facia or instrument panel and can carry instructions, a name or a logo.

All the components of both deflector members may be made of a synthetic plastics material with the exception of the spring 30 in the second embodiment.

The closure member and the body in each embodiment may incorporate contacts which can be used to operate an indicator to show when the closure member is in its open or closed positions.

CLAIMS

1.    A directional air discharge nozzle comprising a tubular
      air deflector member (1,2; 11,12) mounted for swivelling
      in a housing (10; 31) through which air is to be passed
      to and through the deflector member, whereby air admitted
      to the housing (10; 31) is directed by the deflector member
      (1,2; 11,12) in a required direction by appropriate
      swivelling of the deflector member in the housing,
      characterised in that the deflector member (1,2;  11,12)
      has a closure plate (3; 13) therein which is movable in the
      fore-and-aft directions of the deflector member (1, 2;  11,12)
      between a closed position in which it engages a seating
      therein extending peripherally around the deflector member
      to close the flow-path therethrough and an open position in
      which the closure plate is spaced from the seating, thereby
      to permit air flow between the closure plate (3;  13) and
      the peripheral wall of the deflector member (1, 2;  11,12)
      around the whole periphery of the closure plate and
      through the seating in the deflector member.

2.    A nozzle as claimed in Claim 1 in which the outer peripheral
      surface of the deflector member (1, 2;  11,12) is of
      part-spherical shape and is engageable with a complementary
      seating in the housing (10, 31), whereby the deflector
      member is swivellable universally in the housing.

3.    A nozzle as claimed in Claim 2 in which the closure plate
      (3) is mounted on a screw-threaded spindle (9) extending
      co-axially of the deflector member (1,2), whereby rotation
      of the closure plate (3) relatively to the deflector member
      (1,2) effects movement of the closure plate (3) axially
      of the deflector member (1,2) between said closed and open
      positions of the closure plate (3).   (Figs. 1-4)

4. A nozzle as claimed in Claim 3 in which the spindle (9) has a multi-start thread.

5. A nozzle as claimed in Claim 3 or 4 in which the spindle (9) has a thread of coarse pitch.

6. A nozzle as claimed in any one of Claims 3-5 in which the closure plate (3) has a forwardly extending knob or other protrusion (8) by which the closure plate (3) can be turned about the longitudinal axis of the spindle (9) to effect movement of the closure plate (3) between said closed and open positions and by which the deflector member (1,2) can be swivelled universally in the housing (10).

7. A nozzle as claimed in Claim 1 or 2 in which the closure plate (13) is movable between said closed and open positions by axial movement of the closure plate (13) within the deflector member (11,12), the deflector member (11,12) having spring means (30) therein to urge the closure plate (13) into said closed position and releasable catch means (24) to hold the closure plate (13) in said open position against the return force of the spring means (30), the catch means (24) being actuated on depression of the closure plate (13) from its closed position to its open position against the return force of the spring means (30) and being released by further depression of the closure plate (13) followed by relaxation of said further depression, to permit the closure plate (13) to be returned by the spring means (30) to said closed position. (Figs. 5 - 14)

8. A nozzle as claimed in Claim 7 in which the closure plate (13) is supported on an axially-movable spindle (14) slidable in a tubular spindle housing (15) in which a catch member (24) is mounted for rotation, the catch member (24) having radial arms (25) which have bevelled radial edges (26) which are engageable by splines (21) on the spindle (14) and the spindle (14) is depressable by the closure plate (13) against a spring (30), whereby on each depression of the closure plate (13) and thereby the spindle (14), the splines (21) on the latter engage the edges (26) on the catch member (24) and turn the latter into a catch position on a first depression of the closure plate (13) to an open position to compress the spring (30) and on the next depression of the closure plate (13) turn the catch member (24) to a release position in which the spring (30) will return the closure plate (13) to the closed position.

9.  A tubular deflector member for use in a directional air discharge nozzle as claimed in any preceding claim.

0057081

1/4

FIG.1

FIG.2

FIG.3

FIG.4

12

13

**FIG.5**

11

19

20

19

**FIG.6**

0057081

3/4

FIG.7

FIG.8

FIG.10

FIG.9

FIG.11

FIG.14

FIG.12

FIG.13